# EUROPÄISCHE PATENTSCHRIFT

(11) **EP 2 338 709 B1**
(45) Veröffentlichungstag und Bekanntmachung des Hinweises auf die Patenterteilung: **27.05.2015**
(21) Anmeldenummer: 10015409.5
(22) Anmeldetag: 08.12.2010
(51) Int. Cl.: B60G 17/0195, B60N 2/02, B60R 16/037, B60W 50/08, B60W 30/18, B60W 50/00

(54) **Verfahren zum Betrieb eines Kraftfahrzeugs und Kraftfahrzeug**
Method for operating a motor vehicle and motor vehicle
Procédé destiné au fonctionnement d'un véhicule automobile et véhicule automobile

(30) Priorität: 23.12.2009 DE 102009060226
(43) Veröffentlichungstag der Anmeldung: 29.06.2011
(73) Patentinhaber: Audi AG, 85045 Ingolstadt (DE)
(72) Erfinder: Brenneis, Oliver, 85748 Garching (DE); Freyer, Jörn Dr., 81827 München (DE); Schindler, Andreas, 85055 Ingolstadt (DE)
(74) Vertreter: Thielmann, Frank

(56) Entgegenhaltungen:
- WO-A1-2005/110800
- DE-A1- 10 064 937
- DE-A1-102007 003 337

## Beschreibung

Die Erfindung betrifft ein Verfahren zum Betrieb eines Kraftfahrzeugs, umfassend mehrere Fahrzeugsysteme mit wenigstens einem einstellbaren Betriebsparameter und wenigstens einem Sensor zur Ermittlung von die Fahrsituation und/oder die Umgebung des Kraftfahrzeugs beschreibenden Fahrparametern, sowie ein Kraftfahrzeug.

Heutige Kraftfahrzeuge weisen eine Vielzahl von Fahrzeugsystemen, insbesondere auch Fahrerassistenzsystemen, auf, die hauptsächlich der Komfort- und Sicherheitssteigerung dienen. Dabei sind beispielsweise Fahrzeugsysteme zur Komfortsteigerung bekannt, insbesondere Klimaanlagen, Sitzeinstellungssysteme, Lichteinstellungssysteme und dergleichen, weiterhin aktive Fahrwerkssysteme zur Komfort- und Sicherheitssteigerung, beispielsweise ESP-Systeme (elektronisches Stabilitätsprogramm), Dämpferregelungen, aktive Luftfedern, Überlagerungslenkungen und dergleichen, außerdem Fahrerassistenzsysteme im herkömmlichen Sinne, beispielsweise ACC-Systeme (automatic cruise control), Stop-and-Go-Systeme, Spurhalteassistenzsysteme, Spurwechselassistenzsysteme und dergleichen, oder auch aktive Antriebsstrangsysteme, beispielsweise Motor- und Getriebesteuerung, Torque-Vectoring-Differentiale, Allradantrieb und dergleichen. Selbstverständlich sind auch andere Fahrzeugsysteme denkbar.

Häufig sind solche Systeme wenigstens teilweise einstellbar, das bedeutet, sie weisen wenigstens einen Betriebsparameter auf, der beispielsweise durch den Fahrer einstellbar ist. Hierzu sind meist einzelne Menüs vorgesehen. Bekannt sind jedoch auch selbstlernende Systeme oder Systeme, die keinen Konfigurationszugriff oder einen Konfigurationszugriff nur über eine Werkstatt erlauben.

Die Folge ist, dass der Fahrer häufig einen suboptimalen Gesamtfahrzustand vorfindet. Dies kann beispielsweise zu Unwohlsein, Übelkeit, Ermüdung, Lärmbelästigung, Störung durch Vibrationen, Blendung, Luftzug, Frösteln oder einer schlechten Bedienbarkeit bzw. einem schlechten Ansprechverhalten von Systemen (insbesondere indirekte Lenkung, schlechtes Ansprechen des Gaspedals, schlechte Bremsdosierbarkeit, schlechter Federungskomfort und dergleichen) führen.

Das Problem hierbei ist, dass viele Fahrzeugsysteme in Bezug auf das Fahrerwohlbefinden in direkter Wechselwirkung zueinander stehen. Diese Wechselwirkungsbeziehung ist für den Fahrer jedoch kaum ersichtlich, so dass es ihm selbst kaum gelingen kann, eine perfekte Einstellung für sich zu finden. Die komplexen Zusammenhänge und Abhängigkeiten der verschiedenen Einstellmöglichkeiten sind kaum zu durchschauen, was zu einer Überforderung des Fahrers führen kann.

Zwar sind Kraftfahrzeuge bekannt geworden, in denen bestimmte Sätze von Betriebsparametern auswählbar sind, beispielsweise sogenannte "drive select"-Systeme. In diesen sind mehrere Sätze von Betriebsparametern vorgesehen, die beispielsweise einem besonders sportlichen Fahrstil oder dergleichen zuträglich sein sollen. Nichtsdestotrotz stellen die Fahrer individuell sehr unterschiedliche Anforderungen an ihr persönliches Wohlbefinden und ihrem persönlichen Fahrkomfort, so dass eine derartige begrenzte Anzahl auswählbarer Betriebsparametersätze das Problem suboptimaler Gesamtfahrzustände nicht lösen kann.

WO 2005/110800 A1 offenbart ein Verfahren und eine Vorrichtung zur Anpassung einer Funktion in einem Fahrzeug. Ein spezieller Trainings- bzw. Konfigurationsmodus für adaptive Funktionalitäten bzw. Systeme wird vorgesehen, welche vom Fahrer bewusst aktiviert werden, so dass der Fahrer dem System bewusst ein bestimmtes von ihm gewünschtes Verhalten beibringen kann. Dabei wird auch ein Trainingsmodus bei realer Fahrt vorgeschlagen. Hierbei erfolgt eine feste Einstellung bestimmter Parameter eines einzigen Fahrzeugsystems.

Eine Anordnung zur Verbesserung des Betriebskomforts bei Kraftfahrzeugen wird durch die gattungsbildende DE 100 64 937 A1 beschrieben. Es wird festgestellt, dass bestimmte Einstellungen, beispielsweise Sitzstellungen und Spiegeleinstellungen, für verschiedene Fahrttypen wie "Stadtfahrt", "Landstrecke" und dergleichen unterschiedlich gewählt werden, und es wird daher vorgeschlagen, diese fahrtypisch spezifisch abzuspeichern und abrufbar zu machen.

DE 10 2007 003 337 A1 offenbart ein Infotainmentsystem für ein Kraftfahrzeug, bei dem eine umfangreiche Analyse eines ermittelbaren Datensatzes zum Fahrer, zum Fahrzeugzustand und zur Fahrsituation ermöglicht werden soll, woraus beispielsweise Informationen selektiert werden können, die der Nutzer mit höchster Wahrscheinlichkeit benötigt und/oder wünscht.

Der Erfindung liegt daher die Aufgabe zugrunde, ein Verfahren zum Betrieb eines Kraftfahrzeugs anzugeben, welches es ermöglicht, auf eine für den Fahrer einfach zu bewerkstelligende Weise die Fahrzeugsysteme so einzustellen, dass für den individuellen Fahrer ein positives Fahrerwohlbefinden gegeben ist.

Zur Lösung dieser Aufgabe ist bei einem Verfahren der eingangs genannten Art erfindungsgemäß vorgesehen, dass bei Betätigung eines Bedienelements wenigstens ein Teil der aktuellen, die aktuelle Fahrsituation beschreibenden Fahrparameter und wenigstens ein mehrere Fahrzeugsysteme betreffender Teil der aktuellen Betriebsparameter der Fahrzeugsysteme als Datensatz gespeichert werden, woraufhin im weiteren Verlauf in wenigstens einer weiteren Fahrsituation die Betriebsparameter durch Vergleich der Fahrsituation bei Speicherung mit der weiteren Fahrsituation derart eingestellt werden, dass bezüglich wenigstens einer vom Fahrer wahrnehmbaren Fahreigenschaft der Eigenschaftszustand bei Aufnahme des Datensatzes wenigstens annähernd wieder hergestellt wird.

Letztlich wird also vorgeschlagen, dass durch Vergleich der Fahrsituation bei Speicherung und der weiteren Fahrsituation ermittelt wird, wie die Betriebsparameter der Fahrzeugsysteme anzupassen sind, damit der Fahrer bezüglich der wenigstens einen Fahreigenschaft denselben Eindruck erhält. Hierbei können beispielsweise Übertragungstabellen verwendet werden, möglich ist es jedoch auch, durch Algorithmen Betriebsparameter zu ermitteln, die möglichst genau den Eigenschaftszustand wiederherstellen können. Dabei ist es bereits an dieser Stelle nützlich, eine Datenbank vorzusehen, in der wenigstens ein Betriebsparameter und/oder wenigstens ein Fahrzeugsystem (und somit alle seine Betriebsparameter) jeder Fahreigenschaft zugeordnet sind. Eine solche Datenbank kann fahrzustandsspezifisch sein und gibt dann folglich an, welche Betriebsparameter allgemein oder im aktuellen Zustand die entsprechende Fahreigenschaft prägen, so dass nur diese Betriebsparameter für diese Fahreigenschaft berücksichtigt werden müssen.

Der Erfindung liegt die Erfahrung zugrunde, dass sich während einer Fahrt Fahrer häufig relativ wohl fühlen, ohne nun direkt sagen zu können, welche Einstellungen/Betriebsparameter dieses Wohlbefinden genau verursachen, ohne folglich in der Lage zu sein, diesen allgemeinen "Wohlfühlzustand" wiederherzustellen. Mittels des erfindungsgemäßen Verfahrens ist es nun möglich, durch einfache Betätigung eines Bedienelements, beispielsweise eines entsprechenden Schalters, durch das Kraftfahrzeug selbst diesen Zustand des Wohlbefindens anhand konkreter Parameter, nämlich der Fahrparameter und der Betriebsparameter, aufzuzeichnen und im weiteren Verlauf dazu zu nutzen, diesen "Wohlfühlzustand" wiederherzustellen. Der Fahrer muss also letztlich lediglich artikulieren, dass ein bestimmter "Wohlfühlzustand" von ihm als positiv empfunden wird, um es beispielsweise einem Steuergerät zu erlauben, durch die oben auch näher diskutierten Maßnahmen diesen Zustand in wenigstens einer weiteren Fahrsituation wiederherzustellen.

Wenn hier und im Folgenden von Fahreigenschaften bzw. deren Zustand die Rede ist, so sind damit letztlich vom Bedeutungsgehalt zusammenfassbare, gegebenenfalls fahrzustandsspezifische Betriebsparametergruppen zu verstehen, wobei rein als Beispiel hier der Innenraumkomfort, der Geräuschzustand des Innenraums, Fahrwerkseigenschaften, das Antriebsverhalten und dergleichen genannt seien. Dabei ist es selbstverständlich von besonderem Vorteil, wenn alle Betriebsparameter als Teil des Datensatzes gespeichert werden und für alle durch Anpassung der Betriebsparameter beeinflussbaren Fahreigenschaften der Eigenschaftszustand wenigstens annähernd wieder hergestellt wird. Dann kann der gesamte Wohlfühlzustand in der weiteren Fahrsituation möglichst genau reproduziert werden. Dem Fachmann ist hierbei im Übrigen klar, dass die Eigenschaftszustände nicht immer exakt reproduzierbar sind. Daher wird im erfindungsgemäßen Verfahren üblicherweise, falls der Eigenschaftszustand nicht vollständig wiederherstellbar ist, eine Einstellung gesucht, die einem dem gespeicherten Eigenschaftszustand möglichst nah kommenden Eigenschaftszustand entspricht.

Obwohl es selbstverständlich bereits vorteilhaft ist, die Anpassung der Betriebsparameter hinsichtlich des "Wohlfühlzustands" während des gesamten folgenden Fahrbetriebs, also in allen weiteren Fahrsituationen, vorzunehmen, ist es doch bekannt, dass bei vielen Fahrern das individuelle Wohlbefinden vom Fahrzustand selber abhängig ist. Das bedeutet, dass beispielsweise bei einer Fahrt innerhalb einer Stadt ein anderer Eigenschaftszustand als positiv empfunden wird als bei einer Fahrt über eine Landstraße oder eine Autobahn. Daher kann im Rahmen des erfindungsgemäßen Verfahrens auch vorgesehen sein, dass aus den Fahrparametern des Datensatzes ein Fahrzustand aus einer Gruppe von möglichen Fahrzuständen ermittelt wird, wobei im weiteren Verlauf bei Vorliegen einer weiteren Fahrsituation desselben Fahrzustands eine Wiederherstellung des wenigstens einen Eigenschaftszustands erfolgt. Beispielsweise kann also der "Wohlfühlzustand" für eine "Landstraße" gespeichert werden, woraufhin er immer nur dann wiederhergestellt wird, wenn aus der aktuellen Fahrsituation zu schließen ist, dass wiederum eine Landstraße befahren wird (das beispielsweise anhand einer GPS-Messung und eines Navigationssystems festgestellt werden kann). Bezüglich der Fahrzustände sind jedoch selbstverständlich auch verschiedene Abstraktionen möglich.

Es sei an dieser Stelle auch angemerkt, dass es im Rahmen des erfindungsgemäßen Verfahrens auch denkbar ist, dass verschiedene Datensätze gespeichert werden und gezielt vom Fahrer aktiviert werden können, so dass sie beispielsweise während der Aktivierungszeit berücksichtigt werden, um die entsprechenden Eigenschaftszustände wiederherzustellen. So kann ein Fahrer beispielsweise für verschiedene Stimmungen verschiedene Datensätze ablegen und bei Bedarf nutzen, um seine entsprechenden "Wohlfühlzustände" wiederherstellen zu können.

Um die Datensätze zu speichern, kann beispielsweise ein im Kraftfahrzeug vorgesehenes Speichermedium genutzt werden, insbesondere eine Festplatte und/oder eine Speichereinrichtung eines Steuergeräts. Denkbar ist auch ein zentraler Server innerhalb des Kraftfahrzeugs.

Um eine breitere Datenbasis zu haben, auf der gearbeitet werden kann, und auch zeitliche Effekte berücksichtigen zu können, kann vorgesehen sein, dass während eines vorbestimmten Zeitintervalls vor Betätigung des Bedienelements gemessene Fahrparameter gespeichert und ausgewertet werden. Dies kann beispielsweise über einen sogenannten Ringpuffer ermöglicht werden, in dem Fahrparameter immer in dem vorbestimmten Zeitintervall vor dem aktuellen Zeitpunkt vorliegen und entweder direkt als Teil des Datensatzes gespeichert werden können, oder aber im Rahmen einer Auswertung zur Ermittlung weiterer Fahrparameter genutzt werden können, welche dann in den Datensatz eingespeichert werden. Es sei angemerkt, dass es im Allgemeinen ausreichend sein kann, bestimmte, gegebenenfalls auch im Rahmen einer zum Zeitpunkt des Abspeicherns oder zu einem späteren Zeitpunkt durchgeführten Auswertung abgeleitete Fahrparameter in dem Datensatz abzuspeichern.

Die Funktionsweise des Verfahrens sei an einigen konkreten Beispielen im Folgenden näher illustriert. So kann bezüglich des Anregungsmusters am Fahrersitz als Fahreigenschaft vorgesehen sein, dass das Anregungsspektrum im Rahmen einer Aufbaufrequenzanalyse ausgewertet wird. Es ergibt sich folglich ein Frequenzspektrum, das einem Sollspektrum entspricht und als Fahrparameter in dem Datensatz abgespeichert werden kann. In der weiteren Fahrsituation wird dann das aktuelle Frequenzspektrum mit dem abgespeicherten Sollspektrum verglichen, wobei hier selbstverständlich wiederum eine Aufbaufrequenzanalyse durchgeführt wird. Nun werden geeignete Maßnahmen eingeleitet, um den Sollzustand einzustellen. Beispielsweise können Dämpfer und/oder aktive Fahrwerkssysteme entsprechend konfiguriert werden.

Das Sollspektrum ist letztlich eine Art Sollprofil, welches im Datensatz mit abgespeichert wird. Derartige Profile können auch bezüglich anderer Fahreigenschaften ermittelt werden. Beispielsweise ist es denkbar, ein individuelles Temperaturprofil, ein die maximalen Quer- und Längsbeschleunigungen umfassendes Quer- und Längsbeschleunigungsprofil (individueller Kammscher Kreis) oder durch Geräuschanalyse ein individuelles Geräuschprofil zu ermitteln. Entsprechend kann dann eine Komfortoptimierung, also eine Wiederherstellung der entsprechenden Eigenschaftszustände, durch Einstellen der Klimaanlage, der Motorakustik und der Audioanlage, durch Anpassung der Innenbeleuchtung, beispielsweise Ansteuerung von Innenraumlampen zur Farbvariation oder Helligkeitsänderung, usw. erfolgen. Bezüglich des individuellen Kammschen Kreises (maximales Quer- und Längsbeschleunigungsprofil) können beispielsweise die maximal möglichen Längs- und Querbeschleunigungen derart begrenzt werden, dass der Beschleunigungseindruck zur Zeit der Abspeicherung wiederhergestellt werden kann, beispielsweise durch Anpassung der Gaspedalkennlinie, der Lenkung, des Getriebeschaltverhaltens, der Fahrwerkssysteme und dergleichen.

Es sei an dieser Stelle im Übrigen noch angemerkt, dass im Rahmen des erfindungsgemäßen Verfahrens grundsätzlich beliebig abstrakt oder konkret vorgegangen werden kann. Während es also durchaus denkbar ist, die Fahrparameter in einem simplen Fahrzustand abzubilden und nur entsprechend verschiedenen Klassen von Fahrzuständen, beispielsweise "Landstraße" und "Autobahn", Anpassungen vorzusehen, ist es auch möglich, beliebig viele konkrete Fahrparameter zu berücksichtigen, beispielsweise die Witterungsverhältnisse beim Innenraumkomfort als Fahreigenschaft und dergleichen. So ist es mit dem erfindungsgemäßen Verfahren beispielsweise denkbar, dass bei einer eher holprigen Straße ein Sitzmassagesystem stärker angesteuert wird, damit der Fahrer den Massageeffekt ähnlich spürt wie zum Zeitpunkt des Abspeicherns, als eine relativ ebene Strecke befuhr.

Insgesamt ermöglicht es das erfindungsgemäße Verfahren also, über einen zentralen Schalter einen als angenehm empfundenen Gesamtfahrzustand abzuspeichern, der jederzeit wiederherstellbar ist. Dies wird durch eine integrale Abspeicherung ermöglicht, die erstmals auch unter Berücksichtigung von Umwelteinflüssen im weiteren Fahrtverlauf so angepasst wird, dass der "Wohlfühlzustand" auch bei Veränderung der äußeren Umstände erhalten bleibt.

In weiterer Ausgestaltung des erfindungsgemäßen Verfahrens kann vorgesehen sein, dass das Speichern und das Wiederherstellen des Eigenschaftszustands fahrerspezifisch erfolgen und/oder bei mehreren insbesondere fahrzustandsspezifisch gespeicherten Datensätzen ein Fahrer einen Datensatz auswählt. Beispielsweise kann auch vorgesehen sein, dass eine Vorrichtung zur Identifikation des Fahrers benutzt wird, beispielsweise ein personalisierter Schlüssel, eine Vorrichtung zur Eingabe eines Codes, ein Fingerabdrucksensor oder dergleichen, so dass festgestellt werden kann, welche gespeicherten Datensätze welchem Fahrer zuzuordnen sind, so dass dieser seine ganz individuellen Wohlfühleinstellungen nutzen kann. Selbstverständlich ist es grundsätzlich auch denkbar, Einstellungen zwischen Fahrern auszutauschen, wenn beispielsweise mehrere Personen ein Kraftfahrzeug gemeinsam benutzen und die Datensätze einer anderen Person nutzen wollen.

Vorteilhafterweise kann wenigstens ein Datensatz von einer externen Vorrichtung in eine fahrzeugseitige Vorrichtung übertragen werden. So können Datensätze auch über Kraftfahrzeuge hinweg ausgetauscht werden. Denkbar ist es auch, beispielsweise Datensätze für bestimmte Personen, beispielsweise Rennfahrer, aus dem Internet herunterzuladen und auf dem eigenen Kraftfahrzeug zu nutzen. Hierzu kann eine Schnittstelle vorgesehen sein, über die die Datensätze auf eine kraftfahrzeugseitige Speichereinrichtung übertragen werden können.

In besonders vorteilhafter Ausgestaltung des erfindungsgemäßen Verfahrens kann vorgesehen sein, dass vor der Speicherung des Datensatzes durch einen Benutzer eine insbesondere fahrzeugseitig unterstützte Einstellung wenigstens eines Betriebsparameters erfolgt. Dabei ist es besonders zweckmäßig, wenn das Kraftfahrzeug, respektive das das Verfahren durchführende Steuergerät, dazu ausgebildet ist, den Fahrer bei der Einstellung der Betriebsparameter zu unterstützen. Es wird also, bevor das tatsächliche Abspeichern erfolgt, eine Optimierung der Einstellungen vorgenommen, damit in jedem Fall ein besonderes Wohlbefinden des Fahrers gegeben ist.

So kann beispielsweise vorgesehen sein, dass wenigstens ein Satz von Betriebsparametern fahrzeugseitig vorgeschlagen und bei Zustimmung des Fahrers wenigstens für eine vorbestimmte Zeitdauer eingestellt wird. Das Kraftfahrzeug selber ermittelt also - gegebenenfalls abhängig von Eingaben des Fahrers, aber gegebenenfalls auch abhängig von fahrerspezifischen Daten, die darauf hindeuten, bei welchen Einstellungen sich der Fahrer besonders wohl fühlt - bestimmte Sätze von Betriebsparametern, die dann vom Fahrer nach dessen Zustimmung ausprobiert werden können. Beispielsweise ist es denkbar, dass dieser neue Satz von Betriebsparametern fünf Minuten aufrechterhalten wird, woraufhin der Fahrer entscheiden kann, ob er diese Einstellungen beibehalten möchte. In einer anderen Ausgestaltung ist es selbstverständlich auch denkbar, gleich eine permanente Aktivierung vorzunehmen, die der Fahrer auf andere Weise wieder rückgängig machen kann. Dem Fahrer wird also während seiner Fahrt die Möglichkeit gegeben, ohne großen Aufwand verschiedene Einstellungen, die vorgeschlagen werden, für sich auszuprobieren.

In bevorzugter weiterer Ausgestaltung der fahrzeugseitig unterstützten Einstellung kann vorgesehen sein, dass zur benutzerseitigen Einstellung wenigstens eine insbesondere fahrzustandsspezifische Datenbank, in der wenigstens ein Betriebsparameter und/oder wenigstens ein Fahrzeugsystem jeder Fahreigenschaft zugeordnet sind, und ein insbesondere fahrzustandsspezifischer Regelsatz, welcher wenigstens einen mehrere Betriebsparameter zusammenfassenden Einstellparameter mit diesen Betriebsparametern verknüpft, verwendet werden, wobei, insbesondere nach einer kraftfahrzeugseitigen Erkennung des Fahrzustandes, der Wert des Einstellparameters fahrerseitig beeinflusst wird und die Betriebsparameter entsprechend dem Wert wenigstens für eine vorbestimmte Zeitdauer eingestellt werden. Diese Ausgestaltung ermöglicht es mit besonderem Vorteil, über den oder die Einstellparameter dem Fahrer einen einfacher verständlichen Zugriff auf die Betriebsparameter zu ermöglichen. Dies sei anhand einiger Beispiele näher erläutert. Geht es beispielsweise bei der Fahreigenschaft um den Geräuschpegel im Kraftfahrzeug, so kann die Lautstärke im Kraftfahrzeug ein Einstellparameter sein. Der Fahrer kann dann beispielsweise wählen, dass er es gerne etwas leiser hätte. Hieraus resultiert dann eine Absenkung des Werts des Einstellparameters, woraus wiederum eine Ansteuerung diverser Fahrzeugsysteme, beispielsweise einer aktiven Geräuschdämmung, des Motors, der Audioanlage oder dergleichen folgt. Bezüglich des Fahrwerks kann ein solcher Einstellparameter beispielsweise die Komfortabilität sein. Bei Ansprechen der Bedienelemente beim Fahren kann beispielsweise die Trägheit einen Einstellparameter darstellen, also wie schnell das Fahrzeug auf eine Bedienaktion reagiert. Zugehörige Betriebsparameter sind hier beispielsweise Lenkradeinstellung und Pedalkennlinien. Bezüglich des Antriebsverhaltens kann die Sportlichkeit als Einstellparameter gewählt werden, bezüglich des Kraftstoffverbrauchs der Kraftstoffverbrauch selber, bezüglich des Innenraum-Anzeigeverhaltens die Detailliertheit und dergleichen. Dies alles ist möglich aufgrund der Datenbank, die, insbesondere für bestimmte Fahrzustände, angibt, welche Betriebsparameter das durch den Einstellparameter abstrakt beschriebene Optimierungskriterium prägen, so dass es dem Fahrer ermöglicht wird, in einer ihm einfach zu vermittelnden und nachvollziehbaren Weise Betriebsparameter indirekt im Hinblick auf gewollte Ziele, also zielgerichtet, zu verändern.

Es sei an dieser Stelle nochmals darauf hingewiesen, dass die Verwendung einer derartigen Datenbank, um den Fahrer beim Auffinden einer optimalen Einstellung seines Kraftfahrzeugs zu unterstützen, auch unabhängig vom nachfolgenden Abspeichern des Datensatzes eine vorteilhafte Weiterbildung darstellt. Die vorgeschlagene Abstraktion durch eine konkrete Zuordnung von gewollten Effekten zu Betriebsparametern sowie die Verwendung von Regeln zur Anpassung dieser Betriebsparameter bei einem bestimmten Fahrerwunsch kann somit auch unabhängig realisiert werden.

Als besonders vorteilhaft erweist es sich beim erfindungsgemäßen Verfahren zudem, wenn zur Ausgabe von fahrzeugseitigen Vorschlägen und/oder zum Empfang von Eingaben eines Fahrers ein Sprachdialogsystem, insbesondere mit einer virtuellen Dialogperson (Avatar), verwendet wird. Dann kann während des Fahrens im Dialog mit dem Kraftfahrzeug eine schrittweise, insbesondere einstellparameterbasierte Optimierung des Wohlbefindens des Fahrers erreicht werden, indem das Sprachdialogsystem beispielsweise einen Vorschlag ausgibt und der Fahrer diesen ebenso mündlich bestätigt, bis schließlich optimale Einstellungen für den individuellen Fahrer gefunden wurden. Selbstverständlich ist es alternativ oder zusätzlich auch möglich, übliche Bedienelemente zu verwenden, beispielsweise Mensch-Maschine-Interfaces, Schalter, Menüs und dergleichen.

Neben dem erfindungsgemäßen Verfahren betrifft die Erfindung auch ein Kraftfahrzeug mit wenigstens einem Bedienelement und wenigstens einem zur Durchführung des erfindungsgemäßen Verfahrens ausgebildeten Steuergerät. Dabei kann das Steuergerät mit besonderem Vorteil eine Speichereinrichtung umfassen, in der der wenigstens eine Datensatz abgelegt wird. Das Steuergerät ist mithin ausgebildet, die entsprechenden Fahrparameter und Betriebsparameter als Datensatz abzulegen, insbesondere, zunächst noch die Fahrparameter beispielsweise auszuwerten, um entsprechend abgeleitete Fahrparameter zu bestimmen. In einer weiteren Fahrsituation kann dann unter Berücksichtigung des Datensatzes so ein Satz von Betriebsparametern ermittelt werden, das bezüglich wenigstens einer Fahreigenschaft der Eigenschaftszustand zum Zeitpunkt des Speicherns des Datensatzes wiederhergestellt wird. Mit diesem veränderten Betriebsparametern werden dann die entsprechenden Fahrzeugsysteme angesteuert.

Alle Ausführungen bezüglich des erfindungsgemäßen Verfahrens lassen sich analog auf das erfindungsgemäße Kraftfahrzeug übertragen, wobei das Kraftfahrzeug insbesondere auch ein Sprachdialogssystem umfassen kann, um die vorab erfolgende Optimierung auf den speziellen Fahrer hin vornehmen zu können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug, und
- Fig. 2: eine Prinzipskizze zum Ablauf des erfindungsgemäßen Verfahrens.

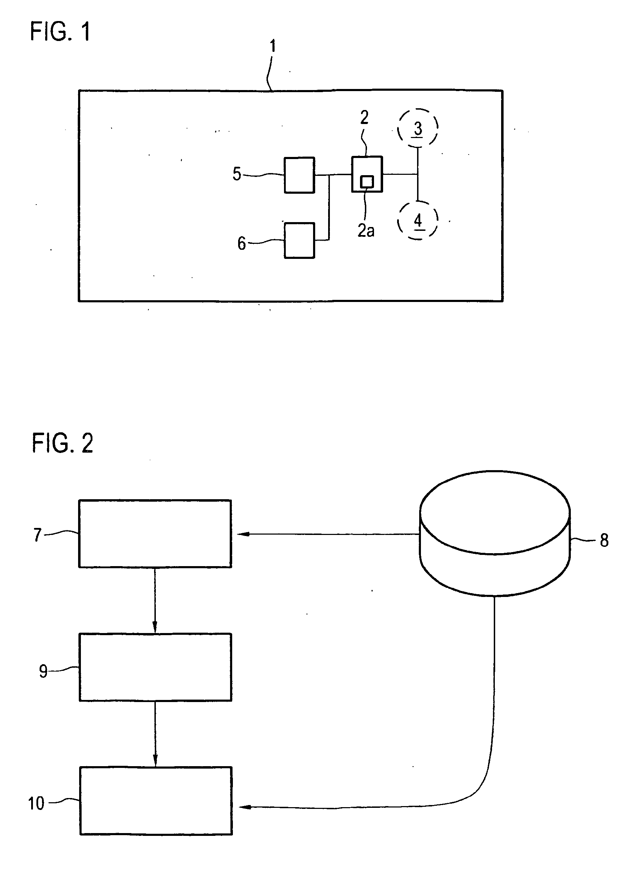

Fig. 1 zeigt ein erfindungsgemäßes Kraftfahrzeug 1. Es umfasst ein Steuergerät 2, das zur Durchführung des erfindungsgemäßen Verfahrens ausgebildet ist, in dem folglich in einer Speichereinrichtung 2a, beispielsweise einer Festplatte, Datensätze gespeichert werden können, die neben Betriebsparametern auch Fahrparameter enthalten, die die Fahrsituation beschreiben, in der die Betriebsparameter vorlagen. Die Betriebsparameter entsprechen dabei einstellbaren Größen von Fahrzeugssystemen 3, während die Fahrparameter aufgrund von Daten von Sensoren 4 des Kraftfahrzeugs 1 ermittelt werden können. Dabei wird insbesondere auch das Umfeld des Kraftfahrzeugs 1 über entsprechende Umfeldsensorik mitbetrachtet.

Zur Interaktion mit einem Fahrer umfasst das Kraftfahrzeug 1 neben üblichen Bedienelementen 5 als kombiniertes Bedienelement und Ausgabemittel ein Sprachdialogsystem 6, über das der Fahrer mit einer virtuellen Person interagieren kann.

In einem Zustand, den der Fahrer als besonders angenehm empfindet, kann er nun über ein Bedienelement 5 oder 6 die Speicherung eines Datensatzes veranlassen. Die aktuellen Betriebsparameter werden folglich gemeinsam mit Fahrparametern, beispielsweise umfassend die über GPS bestimmte Position des Kraftfahrzeugs, Witterungsverhältnisse, ein Aufbaufrequenzspektrum, den Straßenzustand und dergleichen, in der Speichereinrichtung 2a abgespeichert werden. Wählt der Fahrer später diesen Datensatz wieder aus, so ist das Steuergerät 2 ferner dazu ausgebildet, die Betriebsparameter der Fahrzeugsysteme 3 so einzustellen, dass für den Fahrer bezüglich mindestens einer Fahreigenschaft, insbesondere aber bezüglich aller relevanten Fahreigenschaften, derselbe Eindruck entsteht, wie er zum Zeitpunkt des Speicherns des Datensatzes vorlag, das bedeutet, der Fahrer fühlt sich wiederum wohl, da der "Wohlfühlzustand" wiederhergestellt werden kann. Konkrete Beispiele für solche Fahreigenschaften und davon betroffene Systeme werden im Folgenden noch diskutiert werden.

Insbesondere enthält die Speichereinrichtung 2a des Steuergeräts 2 auch eine Datenbank, in der wenigstens ein Betriebsparameter und/oder wenigstens ein Fahrzeugsystem (und somit alle seine Betriebsparameter) jeder Fahreigenschaft zugeordnet sind. Konkret sind mehrere solcher Datenbanken vorgesehen, die für verschiedene Fahrzustände, beispielsweise Fahrten auf der Landstraße, auf der Autobahn, in der Stadt oder "Offroad", anzuwenden sind. Eine solche Datenbank ist in zweierlei Hinsicht vorteilhaft. Zum einen kann sie genutzt werden, um festzustellen, welche Fahrzeugsysteme (und mithin welche Betriebsparameter) in einem Fahrzustand für welche Fahreigenschaft verantwortlich sind, mithin angepasst werden müssen, um den Eigenschaftszustand wieder herzustellen. Zusätzlich ist jeder solchen Datenbank und jeder Fahreigenschaft ein Regelsatz zugeordnet, welcher wenigstens einen mehrere Betriebsparameter zusammenfassenden Einstellparameter mit diesen Betriebsparametern verknüpft. Über die Einstellparameter ist es mithin möglich, die Betriebsparameter und ihre Zusammenhänge derart zu abstrahieren, dass eine für den Fahrer besser verständliche Repräsentation der Einstellungen vorgenommen werden kann.

Fig. 2 zeigt eine Prinzipskizze zum Ablauf des erfindungsgemäßen Verfahrens.

In einem optionalen Schritt 7 optimiert der Fahrer zunächst fahrzeugunterstützt die Einstellungen der Betriebsparameter, das bedeutet, dass er direkt oder indirekt die Betriebsparameter solange anpasst, bis er sich mit den Einstellungen am Besten fühlt. Hierzu gibt es im Wesentlichen zwei Varianten, auf die im Folgenden noch näher eingegangen werden wird. Genutzt wird bereits in diesem Schritt die erwähnte Datenbank 8, zu der auch die Regelsätze gehören. In einem Schritt 9 wird durch Betätigung eines der Bedienelemente 5 oder des Sprachdialogsystems 6 als Bedienelement ein Datensatz gespeichert, der wenigstens einen Teil der aktuellen, die aktuelle Fahrsituation beschreibenden Fahrparameter und wenigstens einen Teil der aktuellen Betriebsparameter der Fahrzeugsysteme 3 umfasst. Gegebenenfalls werden in Schritt 2 auch Fahrparameter ausgewertet, um hieraus weitere Fahrparameter abzuleiten, zudem ist es möglich, dass auch Fahrparameter aus einem vorbestimmten Zeitintervall vor dem Zeitpunkt des Abspeicherns mitberücksichtigt werden, die beispielsweise in einem Ringpuffer vorgehalten wurden.

In einem Schritt 10 wird dann in wenigstens einer weiteren Fahrsituation eine Einstellung der Betriebparameter und mithin der Fahrzeugsysteme derart vorgenommen, dass sich für den Fahrer bezüglich wenigstens einer vom Fahrer wahrnehmbaren Eigenschaft derselbe Eindruck einstellt, wie dies beim Speichern des Datensatzes der Fall war, wozu wiederum Daten der Datenbank 8 berücksichtigt werden können. Bevorzugt werden bezüglich aller Fahreigenschaften die Eigenschaftszustände soweit wie möglich wiederhergestellt.

Dies soll nun anhand zweier Beispiele näher erläutert werden. In einem ersten konkreten Ausführungsbeispiel des erfindungsgemäßen Verfahrens wird zunächst durch das Steuergerät 2 der Fahrzustand bestimmt, also beispielsweise, ob gerade eine Fahrt über eine Landstraße, eine Autobahn oder in der Stadt vorgenommen wird. Dies geschieht durch die Auswertung verschiedener Fahrparameter, beispielsweise umfassend den Lenkradwinkel, die Pedalstellung, GPS-Daten, Gierraten, Beschleunigungswerte und dergleichen. Beispielsweise kann konkreter auch unterschieden werden, ob eine dynamische Landstraßenfahrt oder eher eine komfortable Landstraßenfahrt durchgeführt wird. Die Gruppe möglicher Fahrzustände kann beliebig konkret oder allgemein gehalten werden, sollte jedoch in überschaubarem Rahmen bleiben.

Mittels der Datenbank 8 ist es nun seitens des Kraftfahrzeugs 1 möglich, festzustellen, welche Fahrzeugsysteme 3, oder genauer, welche Betriebsparameter, im aktuellen Fahrzustand für den Fahrer spürbar sind bzw. maßgeblich die aktuellen Fahreigenschaften beeinflussen. Anhand der Datenbankinformation kann also situationsangemessen entschieden werden, welche Fahrzeugsysteme 3 gerade die Fahreigenschaften prägen.

Nun schlägt das Kraftfahrzeug 1 über das Fahrerdialogsystem 6 interaktiv vor, dem Fahrer verschiedene Konfigurationen von Betriebsparametern vorzustellen, beispielsweise verschiedene Modi eines bestimmten Fahrzeugsystems 3 oder auch allgemeinere Einstellungen mehrerer Fahrzeugsysteme 3. Dabei kann ein Algorithmus verwendet werden, der auf Basis der Datenbank 8 und des Fahrzustands Vorschläge zur zielgerichteten Beeinflussung der Einstellung der Betriebsparameter ermittelt und vorschlägt. Einem solchen Vorschlag kann der Fahrer nun ebenso über das Sprachdialogsystem 6 folgen, woraufhin das Steuergerät 2 die Betriebsparameter entsprechend seines Vorschlages verstellt. Der Fahrer kann dann über das Sprachdialogsystem 6 die Veränderung bewerten und gegebenenfalls weitere Vorschläge erhalten. Insbesondere besteht für den Fahrer die Möglichkeit, auch über das Sprachdialogsystem 6, den Ausprägungsgrad der Vorschläge interaktiv zu beeinflussen. Dies geschieht mit besonderem Vorteil anhand der Einstellparameter. So kann beispielsweise bezüglich des Fahrwerks vom Fahrer angegeben werden, dass das Fahrwerk härter oder weicher eingestellt werden soll. Es sei jedoch an dieser Stelle angemerkt, dass auch andere Schnittstellen zur Interaktion genutzt werden können, beispielsweise Taster, Hebel, Schalter und dergleichen.

Wird auf diese Weise eine für den Fahrer interessante und ein Wohlbefinden auslösende Gesamteinstellung gefunden, kann dieser interaktiv durch Betätigung eines Bedienelements - also eine entsprechende Anweisung an das Sprachdialogsystem 6 oder ein anderes Bedienelement 5 - eine Speicherung in der Speichereinrichtung 2a veranlassen.

Eine andere Variante, also ein zweites Ausführungsbeispiel, zur Umsetzung des Schritts 7 soll nun vorgestellt werden. Es sei angenommen, dass der Fahrer in dem Kraftfahrzeug 1 fährt und bestimmte Fahreigenschaften als gut oder schlecht empfindet. Dann kann er, beispielsweise wieder über das Sprachdialogsystem 6, dem Steuergerät 2 interaktiv mitteilen, wie er diese Fahreigenschaft findet und über Eigenschaftswünsche, vermittelt über die Einstellparameter, eine Veränderung der Betriebsparameter bewirken. Grundlage ist dabei wiederum der Fahrzustand, der vom Steuergerät 2 wie oben beschrieben ermittelt wird.

Der Fahrer kann also beispielsweise auswählen, den Geräuschpegel zu verändern. Der Einstellparameter hier kann die Lautstärke innerhalb des Kraftfahrzeugs 1 sein. Der Fahrer kann nun angeben, gegebenenfalls auch anhand eines Zahlenwertes für den Einstellparameter, welche Änderung er wünscht, beispielsweise lauter, leiser oder dergleichen. Dem System ist über die Datenbank 8 für den Fahrzustand nun wiederum bekannt, welche Betriebsparameter hier zu ändern sind, so dass insbesondere die Regeln des Regelsatzes benutzt werden können, um dem Wunsch des Fahrers Folge zu leisten. Ähnlich kann beispielsweise das Antriebsverhalten bezüglich der Sportlichkeit oder das Innenraum-Anzeigeverhalten bezüglich Detailliertheit eingestellt werden, wobei selbstverständlich noch viele andere Möglichkeiten denkbar sind. Es sei angemerkt, dass selbst bei dieser konkreten Auswahl von Fahreigenschaften und Einstellparametern durch den Fahrer das Steuergerät 2 selbstverständlich ausgebildet sein kann, dem Fahrer Fragen zu stellen oder ihm, beispielsweise auch in Reaktion auf die Fragen, Vorschläge zu unterbreiten. Es kann beispielsweise ein intelligenter Dialog mit einer virtuellen Dialogperson des Sprachdialogsystems vorgesehen werden.

Gefällt dem Fahrer der entstehende Eigenschaftszustand, so können die entsprechenden Einstellungen gespeichert werden, was auch für diese Eigenschaften integral erfolgt, das bedeutet, alle Betriebsparameter, die zu dieser Fahreigenschaft beitragen, werden berücksichtigt.

Hat der Fahrer die Optimierung ganz abgeschlossen, so kann er wie oben beschrieben diesen Wohlfühlzustand als Datensatz abspeichern, um ihn dann grundsätzlich oder bei Auswahl wieder zu verwenden.

In Schritt 10 des erfindungsgemäßen Verfahrens werden, wie bereits erwähnt, bevorzugt mehrere Fahrzeugeigenschaften betrachtet. Beispielsweise können die Anregungen am Fahrersitz analysiert werden. Hierzu wird eine Aufbaufrequenzanalyse durchgeführt, um ein Sollspektrum zu ermitteln. Dieses wird als Fahrparameter gespeichert, was in diesem Ausführungsbeispiel noch in Schritt 9 geschieht. In Schritt 10 kann dann das aktuelle Frequenzspektrum mit dem abgespeicherten Sollspektrum verglichen werden und es können, wobei wiederum die Datenbank 8 berücksichtigt werden kann, geeignete Maßnahmen eingeleitet werden, um den durch das Sollspektrum beschriebenen Sollzustand wieder herzustellen, beispielsweise eine spezielle Ansteuerung von Dämpfern oder aktiven Fahrwerkssystemen, deren Betriebsparameter also angepasst werden.

Ähnlich kann, wie auch bereits in der allgemeinen Beschreibung angesprochen, beispielsweise bezüglich eines Temperaturprofils, eines maximalen Quer- und Längsbeschleunigungsprofils (individueller Kammscher Kreis), eines Geräuschprofils, eines Innenbeleuchtungsprofils und dergleichen verfahren werden.

So kann von einer bestimmten Fahrsituation aus das Gefühl des Wohlbefindens, das der Fahrer in dieser Fahrsituation empfunden hat, auf weitere Fahrsituationen übertragen werden.

## Patentansprüche

1. Verfahren zum Betrieb eines Kraftfahrzeugs (1), umfassend mehrere Fahrzeugsysteme (3) mit wenigstens einem einstellbaren Betriebsparameter und wenigstens einen Sensor (4) zur Ermittlung von die Fahrsituation und/oder die Umgebung des Kraftfahrzeugs (1) beschreibenden Fahrparametern,
**dadurch gekennzeichnet,**
**dass** bei Betätigung eines Bedienelements (5, 6) wenigstens ein Teil der aktuellen, die aktuelle Fahrsituation beschreibenden Fahrparameter und wenigstens ein mehrere Fahrzeugsysteme (3) betreffender Teil der aktuellen Betriebsparameter der Fahrzeugsysteme (3) als Datensatz gespeichert werden, woraufhin im weiteren Verlauf in wenigstens einer weiteren Fahrsituation die Betriebsparameter durch Vergleich der Fahrsituation bei Speicherung mit der weiteren Fahrsituation derart eingestellt werden, dass bezüglich wenigstens einer vom Fahrer wahrnehmbaren Fahreigenschaft der Eigenschaftszustand bei Aufnahme des Datensatzes wenigstens annähernd wieder hergestellt wird.

2. Verfahren nach Anspruch 1,
**dadurch gekennzeichnet,**
**dass** alle Betriebsparameter als Teil des Datensatzes gespeichert werden und für alle durch Anpassung der Betriebsparameter beeinflussbaren Fahreigenschaften der Eigenschaftszustand wenigstens annähernd wieder hergestellt wird.

3. Verfahren nach Anspruch 1 oder 2,
**dadurch gekennzeichnet,**
**dass** aus den Fahrparametern des Datensatzes ein Fahrzustand aus einer Gruppe von möglichen Fahrzuständen ermittelt wird, wobei im weiteren Verlauf bei Vorliegen einer weiteren Fahrsituation desselben Fahrzustands eine Wiederherstellung des wenigstens einen Eigenschaftszustands erfolgt.

4. Verfahren nach einem der vorangehenden Ansprüche,
**dadurch gekennzeichnet,**
**dass** während eines vorbestimmten Zeitintervalls vor Betätigung des Bedienelements gemessene Fahrparameter gespeichert und ausgewertet werden.

5. Verfahren nach einem der vorangehenden Ansprüche,
**dadurch gekennzeichnet,**
**dass** das Speichern und das Wiederherstellen des Eigenschaftszustands fahrerspezifisch erfolgen und/oder bei mehreren insbesondere fahrzustandspezifisch gespeicherten Datensätzen ein Fahrer einen Datensatz auswählt.

6. Verfahren nach einem der vorangehenden Ansprüche,
**dadurch gekennzeichnet,**
**dass** wenigstens ein Datensatz von einer externen Vorrichtung in eine fahrzeugseitige Vorrichtung übertragbar ist.

7. Verfahren nach einem der vorangehenden Ansprüche,
**dadurch gekennzeichnet,**
**dass** vor der Speicherung des Datensatzes durch einen Benutzer eine insbesondere fahrzeugseitig unterstützte Einstellung wenigstens eines Betriebsparameters erfolgt.

8. Verfahren nach Anspruch 7,
**dadurch gekennzeichnet,**
**dass** wenigstens ein Satz von Betriebsparametern fahrzeugseitig vorgeschlagen und bei Zustimmung des Fahrers wenigstens für eine vorbestimmte Zeitdauer eingestellt wird.

9. Verfahren nach Anspruch 7 oder 8,
**dadurch gekennzeichnet,**
**dass** zur benutzerseitigen Einstellung wenigstens eine insbesondere fahrzustandsspezifische Datenbank (8), in der wenigstens ein Betriebsparameter und/oder wenigstens ein Fahrzeugsystem (3) jeder Fahreigenschaft zugeordnet sind, und ein insbesondere fahrzustandsspezifischer Regelsatz, welcher wenigstens einen mehrere Betriebsparameter zusammenfassenden Einstellparameter mit diesen Betriebsparametern verknüpft, verwendet werden, wobei, insbesondere nach einer kraftfahrzeugseitigen Erkennung des Fahrzustandes, der Wert des Einstellparameters fahrerseitig beeinflusst wird und die Betriebsparameter entsprechend dem Wert wenigstens für eine vorbestimmte Zeitdauer eingestellt werden.

10. Verfahren nach einem der Ansprüche 7 bis 9,
**dadurch gekennzeichnet,**
**dass** zur Ausgabe von fahrzeugseitigen Vorschlägen und/oder zum Empfang von Eingaben eines Fahrers ein Sprachdialogsystem, insbesondere mit einer virtuellen Dialogperson, verwendet wird.

11. Kraftfahrzeug (1), umfassend mehrere Fahrzeugsysteme (3), mit wenigstens einem einstellbaren Betriebsparameter und wenigstens einen Sensor (4) zur Ermittlung von die Fahrsituation und/oder die Umgebung des Kraftfahrzeugs (1) beschreibenden Fahrparametern, mit wenigstens einem Bedienelement (5, 6) und wenigstens einem zur Durchführung des Verfahrens nach einem der Ansprüche 1 bis 10 ausgebildetem Steuergerät (2).

## Claims

1. Method for operating a motor vehicle (1), comprising a plurality of vehicle systems (3) having at least one operating parameter which can be set and at least one sensor (4) for determining driving parameters describing the driving situation and/or the surroundings of the motor vehicle (1), **characterised in that**, upon actuation of an operating element (5, 6), at least some of the current driving parameters describing the current driving situation and at least some of the current operating parameters of vehicle systems (3) which affect a plurality of vehicle systems (3) are stored as a set of data, whereupon, in the further course, in at least one further driving situation, the operating parameters are set by comparing the driving situation at the time of storage with the further driving situation such that the property state at the time when the set of data was recorded is at least approximately restored with regard to at least one driving property which can be perceived by the driver.

2. Method according to claim 1, **characterised in that** all the operating parameters are stored as part of the set of data, and the property state is at least approximately restored for all the driving properties which can be influenced by adapting the operating parameters.

3. Method according to either claim 1 or claim 2, **characterised in that** a driving state from a group of possible driving states is determined from the driving parameters of the set of data, the at least one property state being restored when a further driving situation of the same driving state is present during the further course.

4. Method according to any of the preceding claims, **characterised in that** measured driving parameters are stored and evaluated during a predetermined time interval prior to actuating the operating element.

5. Method according to any of the preceding claims, **characterised in that** the property state is stored and restored in a driver-specific manner and/or a driver selects a set of data in the event of a plurality of in particular driving-state-specific, stored sets of data.

6. Method according to any of the preceding claims, **characterised in that** at least one set of data can be transmitted from an external device to an onboard device.

7. Method according to any of the preceding claims, **characterised in that**, before a user stores the set of data, at least one operating parameter is set in a manner supported in particular by the vehicle.

8. Method according to claim 7, **characterised in that** at least one set of operating parameters is suggested by the vehicle and set at least for a predetermined period of time upon approval by the driver.

9. Method according to either claim 7 or claim 8, **characterised in that** at least one in particular driving-state-specific database (8) in which at least one operating parameter and/or at least one vehicle system (3) are assigned to each driving property, and an in particular driving-state-specific control set, which associates at least one setting parameter combining a plurality of operating parameters with said operating parameters, are used for setting by the user, the value of the setting parameter being influenced by the driver and the operating parameters being set according to the value at least for a predetermined period of time, in particular following recognition by the motor vehicle of the driving state.

10. Method according to any of claims 7 to 9, **characterised in that** an interactive voice response system, in particular having a virtual dialogue person, is used to output suggestions from the vehicle and/or to receive input from a driver.

11. Motor vehicle (1) comprising a plurality of vehicle systems (3) having at least one operating parameter which can be set and at least one sensor (4) for determining driving parameters describing the driving situation and/or the surroundings of the motor vehicle (1), having at least one operating element (5, 6) and at least one control unit (2) which is configured to carry out the method according to any of claims 1 to 10.

## Revendications

1. Procédé pour le fonctionnement d'un véhicule automobile (1) comprenant plusieurs systèmes de véhicule (3) avec au moins un paramètre de fonctionnement réglable et au moins un capteur (4) pour déterminer des paramètres de marche décrivant la situation de marche et/ou l'environnement du véhicule automobile (1),
**caractérisé en ce que** :
lors de la commande d'un élément de réglage (5, 6), au moins une partie du paramètre de marche courant décrivant la situation de marche courante et au moins une partie - concernant plusieurs systèmes de véhicule (3) - des paramètres de fonctionnement courants des systèmes de véhicule (3) sont mémorisées sous la forme d'un jeu de données, après quoi, dans l'autre déroulement visant au moins une autre situation de marche, les paramètres de fonctionnement sont réglés par comparaison de la situation de marche lors de la mémorisation avec l'autre situation de marche de sorte que, en ce qui concerne au moins une propriété de marche observable par le chauffeur, l'état de la propriété est restauré au moins approximativement à la réception du jeu de données.

2. Procédé selon la revendication 1,
**caractérisé en ce que** :
tous les paramètres de fonctionnement sont mémorisés en tant que partie du jeu de données et, pour toutes les propriétés de marche influençables par adaptation des paramètres de fonctionnement, l'état des propriétés est restauré au moins approximativement.

3. Procédé selon la revendication 1 ou la revendication 2,
**caractérisé en ce que** :
l'on détermine à partir des paramètres de marche du jeu de données un état de marche entre un groupe d'états de marche possibles, dans lequel, dans l'autre déroulement en présence d'une autre situation de marche du même état de marche, il se produit une restauration du au moins un état des propriétés.

4. Procédé selon l'une quelconque des revendications précédentes,
**caractérisé en ce que** :
des paramètres de marche mesurés au cours d'un intervalle de temps prédéterminé avant commande de l'élément de réglage sont mémorisés et exploités.

5. Procédé selon l'une quelconque des revendications précédentes,
**caractérisé en ce que** :
la mémorisation et la restauration de l'état des propriétés se font spécifiquement en fonction du chauffeur et/ou un chauffeur choisit un jeu de données parmi plusieurs jeux de données mémorisés en particulier spécifiquement en fonction de l'état de marche.

6. Procédé selon l'une quelconque des revendications précédentes,
**caractérisé en ce que** :
au moins un jeu de données peut être transmis d'un dispositif externe à un dispositif côté véhicule.

7. Procédé selon l'une quelconque des revendications précédentes,
**caractérisé en ce que** :
avant la mémorisation du jeu de données par un utilisateur, il se produit au moins un réglage au moins d'un paramètre de fonctionnement supporté en particulier côté véhicule.

8. Procédé selon la revendication 7,
**caractérisé en ce que** :
au moins un jeu de paramètres de fonctionnement est proposé côté véhicule et est réglé au moins pour une période de temps prédéterminée lors de l'assentiment du chauffeur.

9. Procédé selon la revendication 7 ou la revendication 8,
**caractérisé en ce que** :
pour le réglage côté utilisateur, au moins une base de données (8) en particulier spécifique à l'état de marche, dans laquelle au moins un paramètre de fonctionnement et/ou au moins un système de véhicule (3) et ou sont affectés à chaque propriété et l'on utilise un jeu de règles en particulier spécifique à l'état de marche, qui lie au moins un paramètre de réglage qui regroupe plusieurs paramètres de fonctionnement à ces paramètres de fonctionnement, dans lequel, en particulier après une reconnaissance de l'état de marche côté véhicule automobile, la valeur du paramètre de réglage est influencée côté chauffeur et les paramètres de fonctionnement sont réglés en fonction de la valeur au moins sur une période de temps prédéterminée.

10. Procédé selon l'une quelconque des revendications 7 à 9,
**caractérisé en ce que** :
pour fournir des propositions côté véhicule et/ou recevoir des entrées d'un chauffeur, on utilise un système de dialogue vocal, en particulier avec un interlocuteur virtuel.

11. Véhicule automobile (1) comprenant plusieurs système de véhicule (3), avec au moins un paramètre de fonctionnement réglable et au moins un capteur (4) pour déterminer des paramètres de marche décrivant la situation de marche et/ou l'environnement du véhicule automobile (1), avec au moins un élément de réglage (5, 6) et au moins un appareil de commande (2) conçu pour réaliser le procédé selon l'une quelconque des revendications 1 à 10.
